# EUROPEAN PATENT APPLICATION

(11) **EP 4 435 672 A1**
(43) Date of publication of application: **25.09.2024**
(21) Application number: 23162917.1
(22) Date of filing: 20.03.2023
(51) Int. Cl.: G06N 3/067, G06N 3/0464

(54) **MULTILAYER OPTO-ELECTRONIC NEURAL NETWORK**

(71) Applicant: Max-Planck-Gesellschaft zur Förderung der Wissenschaften e.V., 80539 München (DE)
(72) Inventor: SONG, Alexander, 72072 Tübingen (DE); KOTTAPALLI, Sai Nikhilesh Murty, 69123 Heidelberg (DE); SCHLIEDER, Lennart, 72076 Tübingen (DE); VOLCHKOV, Valentin, 72076 Tübingen (DE); SCHÖLKOPF, Bernhard, 72076 Tübingen (DE); FISCHER, Peer, 79100 Freiburg (DE)
(74) Representative: Hofmann, Matthias

(57) **Abstract**

The present invention provides an opto-electronic computing device, comprising one or more computation modules that each comprise:
- an input layer comprising an array of photosensors for generating electrical signals based on input optical signals,
- an output layer comprising an array of light emitters for generating output optical signals,
- electronic circuitry for processing the generating electrical signals to generate driving signals for the array of light emitters, and
- an optical layer comprising an array of optical elements for modifying the optical signals,
characterized in that the device comprises one or more connection elements that pass the electrical signals from the input layer to the output board and that are oriented perpendicular to a plane of the input board.

## Description

### TECHNICAL FIELD

The present invention relates to an opto-electronic computing device. The present invention also relates to a method for building an opto-electronic computing device.

### BACKGROUND

Artificial neural networks are used within machine learning for solving problems ranging from image and speech recognition to drug discovery and protein folding. The success of using artificial neural networks for these problems has been dependent on the availability of fast, energy-efficient computing resources and the continued increase in computing demand has led to development of novel computing devices.

Optical and opto-electronic computing devices have been widely explored due to the potential for large-scale, fast, and energy efficient deployments. Optical and opto-electronic devices are particularly suited for performing the large-scale repetitive computations used in artificial neural networks such as matrix-vector multiplications and convolution mathematical operations.

An example of an optical computing device that can implement multiple layers of an artificial neural network is described in Carolan et al. (US 10,768,659 B2). The device has an electronic interface to convert electrical signals to optical signals, performs a series of operations optically including nonlinear operations, and the optical signals are converted to electrical signals via detection layer. The optical operations are performed with coherent optical techniques. Another example of optical-based machine learning is described in Ozcan et al. (US 2021/0 142 170 A1). Nonlinear optical operations and the requirement for coherent light in these devices constrain the ease of scalability of devices to large numbers of neurons or processing units within a single computing device due to stability or space limitations.

Modern artificial neural networks include a series of linear mathematical operations interleaved with nonlinear mathematical operations. A need exists for an opto-electronic computing device that is capable of implementing multiple layers or portions of multiple layers of an artificial neural network. There is also a need for the opto-electronic computing device to be scalable enough to accommodate operation speeds required by modern artificial neural networks. There is also a need to minimize the consumption of electrical power in devices capable of artificial neural network functions.

### SUMMARY OF THE INVENTION

The objective of the present invention is to provide an opto-electronic computing device, which overcomes one or more of the above-mentioned problems of the prior art.

A first aspect of the invention provides an opto-electronic computing device, comprising one or more computation modules that each comprise:
- an input layer comprising an array of photosensors for generating electrical signals based on input optical signals,
- an output layer comprising an array of light emitters for generating output optical signals,
- electronic circuitry for processing the generating electrical signals to generate driving signals for the array of light emitters, and
- an optical layer comprising an array of optical elements for modifying the optical signals,
wherein the device comprises one or more connection elements that pass the electrical signals from the input layer to the output layer and that are oriented perpendicular to a plane of the input layer.

The device of the first aspect provides a particularly space-saving configuration. In particular, since the connection elements are directed perpendicular to a plane of the input layer, they pass the electrical signals directly to the output layer. Thus, minimum wiring between input layer and output layer is involved and the computing device can be scaled to a larger number of neurons.

Each of the above-mentioned layers may be implemented as a planar board, preferably with rectangular dimensions. The planar boards may be stacked in a direction perpendicular to a plane of the boards. Thus, the direction of stacking the boards is parallel to a direction of the mentioned connection elements.

The device can be used to implement neural networks with different properties and configurations. In particular, linear properties, such as weights of individual connections can be encoded in the optical layer and nonlinear properties, such as the Rectified Linear Unit (ReLu) function, can be encoded in the electronic circuitry.

In the device of the first aspect, the one or more computation modules can comprise a plurality of computation modules, e.g. more than 5 or more than 10, which are stacked such that the output of one computation module is passed to the next computation module as input.

Advantageously, the computing device of the first aspect can be used with light emitters, e.g., LEDs, that generate incoherent light. This avoids the increased production cost of coherent light sources.

Preferably, the input layer of one computation module comprises at least 10.000 photosensors, optionally at least 1 million photosensors and the output layer preferably comprises at least 10.000 light emitters, preferably at least 1 million light emitters.

In a first implementation of the device of the first aspect, the input layer, the output layer and the electronic circuitry of at least one of the one or more computation modules are implemented on an opto-electronic processing board. This has the advantage that the computing device can be produced with particularly small space requirements and with high stability (since the different layers can be implemented on or within the same board). Preferably, the board is planar and has rectangular dimensions.

In a further implementation of the device according to the first aspect, the device further comprises:
- a read-in layer comprising a read-in array of light emitters for receiving read-in electrical signals and outputting optical signals, and/or
- a read-out layer comprising a read-out array of photoemitters for receiving optical signals and outputting read-out electrical signals.

The read-in and read-out layers of this implementation have the advantage that the device can easily be connected and integrated with existing electronics. The layers can be implemented as planar boards.

In an alternative embodiment, the read-out layer can be implemented as a high-speed camera synchronized to a same clock signal as the input electronic layer.

In one embodiment, the ending electronic layer includes of individual units arranged on a two-dimensional square lattice. Each individual unit comprises photosensitive regions connected to a current amplification circuit including transimpedance amplification, where each unit is connected to a time-varying analog output.

In a further implementation of the device according to the first aspect, the device comprises a plurality of computation units which are oriented in parallel.

This has the advantage that the computation units can be stacked in space-saving and stable manner. In a preferred embodiment, the computation units have a same height and width, e.g. they comprise input boards and/or output boards which have the same dimensions within the plane. This allows for a particularly stable and compact computing device.

In a further implementation of the device according to the first aspect, the electronic circuitry is mounted on the input board. This further reduces a space requirement.

In a further implementation of the device according to the first aspect, the electronic circuitry is configured to combine a first and a second electrical signal from two adjacent photosensors to implement a subtraction and to generate a driving signal based on a result of the subtraction.

In a further implementation of the device according to the first aspect, the electronic circuitry is configured to combine a plurality of electrical signals from adjacent photosensors to implement a maximum value function and/or an average value function.

In a further implementation of the device according to the first aspect, the electronic circuitry is configured to combine electrical signals from four adjacent photosensors to implement a complex number encoding function.

In a further implementation of the device according to the first aspect, the electronic circuitry is configured to temporarily store a state corresponding to an input optical signal and/or corresponding to a driving signal. Thus, the device allows for a particularly useful combination of the strengths of electronic circuitry (e.g. for temporary storage of data) and optical processing (high processing speed).

In a further implementation of the device according to the first aspect, the electronic circuity is configured to perform non-linear processing of the electrical signals and/or the optical layer is configured to perform linear processing of the optical signals.

In a further implementation of the device according to the first aspect, the device comprises a plurality of computation modules, in particular a plurality of computation modules with same dimensions and/or a same number of photosensors and/or light emitters, wherein the plurality of computation modules are arranged in a sequence, where the modulated output optical signals of one computation modules are passed to a next computation module of the plurality of computation modules.

In a further implementation of the device according to the first aspect, the optical elements include an amplitude mask with weights that map from multiple light emitters of the array of light emitters to photosensors of an array of photosensors of the next computation module, wherein preferably the weights are implemented by dithering of analog weights of an opaque material on a transparent surface.

In a further implementation of the device according to the first aspect, optical signals from a group of emitters interact with a same region of the amplitude mask, wherein preferably a spatially shifted interaction between groups of emitters and amplitude mask regions implements a convolution operation.

In a further implementation of the device according to the first aspect, the optical elements include one or more lenses that are configured to direct light from multiple light emitters to photosensors of an array of photosensors of the next computation module, wherein preferably the one or more lenses are designed based on a height map that has been determined using a differentiable raytracer.

The standard approach to designing custom lenses for is to use a ray tracer software that can optimize lens performance over a set of adjustable parameters. This approach works poorly for this particular application as the approach is designed for continuous mapping of input light to output positions while this application require a discrete mapping of input light to output positions. Additionally, this approach optimizes poorly for height maps that are allowed to vary along many dimensions and generally fails for high dimensional optimization problems.

A similar problem to designing height maps is the design of phase masks. A common approach for this problem is to use an iterative optimization algorithm such as the Gerchberg-Saxton algorithm. This approach is not applicable for this problem as it does not apply for a system of multiple incoherent light sources.

In a further implementation of the device according to the first aspect, the device further comprises optical connections that bypass one or more computation modules in the sequence of computation modules.

In a further implementation of the device according to the first aspect, the optical layer is configured such that the optical signal sequentially passes through a first free space, the array of optical elements and a second free space, before reaching photosensors of the next computation module and/or an output module.

In a further implementation of the device according to the first aspect, the optical layer comprises an array of lenslets and the device is configured such that the optical signals from groups of light emitters pass through a same lenslet of the array of lenslets.

A further aspect of the invention refers to a computer-readable storage medium storing program code, the program code comprising instructions that when executed by a processor carry out the method of the second aspect or one of the implementations of the second aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
**FIG. 1** schematically illustrates one embodiment of the multilayer opto-electronic neural network, including a read-in layer, a series of alternating opto-electronic boards and optical layers, and a read-out layer.
**FIGs. 2a** and **2b** schematically illustrates one embodiment of the input layer where each individual electronic input of an input set is processed and projects light to an individual light emitter. It also schematically illustrates another embodiment of the input layer where subsets the electronic input are connected from one input cable to multiple light emitters.
**FIGs. 3a** and **3b** schematically illustrates one embodiment of the output layer where a set of optical signals is converted to electronic signals via photodetectors, processed and/or amplified, and then individually read-out. It also schematically illustrates another embodiment of the output layer where, after the processing and/or amplification step, electronic signals are read-out in subsets where multiple output signals are read-out with a single output cable.
**FIG. 4a** and **4b** schematically illustrates one embodiment of an intermediate opto-electronic layer where a set of optical signals is converted to electronic signals via photodetectors, processed and/or amplified, and then projected as light to light emitters. It also schematically illustrates another embodiment of an intermediate opto-electronic layer where additional signals are retrieved and/or stored from the layer during the processing step.
**FIG. 5a** to **5e** schematically illustrates possible embodiments of the linear optical layer. Examples of embodiments that implement a fully connected neural network layer, a convolutional neural network layer, a graph convolutional neural network layer, and a Fourier transform layer are also provided.
**FIGs. 6a** and **6b** depict possible embodiments of the electronics used for input and output opto-electronic layers. Examples of electronic circuits that implement the processing of signals from photodetectors and processing of signals for light emitters is provided. Examples of electronic circuits that interface with the read-in and read-out of data to the multilayer opto-electronic neural network are also provided.
**FIGs. 7a** to **7e** depict possible embodiments of the electronics used for the nonlinear opto-electronic layers. Examples of electronic circuits that implement the processing of signals from photodetectors and processing of signals for light emitters is provided. Additionally, examples of electronic circuits that implement several example nonlinear functions useful for modern artificial neural networks is provided.
**FIGs. 8a** to **8c** show the voltage at photodetector in response to different input light intensities.
**FIG. 8d** shows the temporal intensity response curve.
**FIG. 9** schematically illustrates one possible interface of the multilayer opto-electronic neural network with an electronic read-in and read-out apparatus. It also highlights features that may be present in some embodiments of the multilayer opto-electronic neural network.
**FIG. 10a** to **10d** schematically illustrate design features of the intermediate opto-electronic layer that enable scale-up of the layer for large numbers of units.
**FIG. 11a** to **11c** schematically illustrate possible embodiments of the linear optical layer that have desirable qualities when used with opto-electronic layers with large numbers of units.

### DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

Embodiments of the present technology relate to the physical architecture or implementation of an opto-electronic system or opto-electronic computing device. The overall physical architecture or implementation of an opto-electronic system or opto-electronic neural network is described sometimes herein as "multilayer opto-electronic neural network". Embodiments of a multilayer opto-electronic neural network can perform the following operations: 1. Receiving sets of electronic signals (referred to herein as read-in), 2. performing a series of customizable mathematical operations in optical and electronic domains, and 3. outputting sets of electronic signals (referred to herein as read-out). In other embodiments, the computing device may be part of a large purely optical computation system. In those embodiments, no read-in or read-out may be required.

In most embodiments, the opto-electronic computing device comprises a series of interleaved opto-electronic and optical layers, beginning with an opto-electronic read-in layer and ending with an opto-electronic read-out layer. Herein, layer can refer to a mathematical grouping and does not imply that the elements belonging to a layer are spatially grouped together or that the device is necessarily planar. In a preferred embodiment, one or more or all of the layers are implemented as planar boards.

The read-in layer receives sets of electronic input signals. This layer transforms the electrical signals into optical signals via light emitters and may include additional electronic processing and/or amplification. The read-out layer transmits signals out of the device. The layer transforms sets of optical signals to electronic signals via photodetectors and may include additional electronic processing and/or amplification on these signals.

There are additional intermediate opto-electronic layers between the read-in and read-out layers. These layers first receive and transform optical signals to electronic signals via photodetectors. Then they perform electrical processing including a nonlinear mathematical operation and/or amplification on these signals. Finally, they transform the electrical signals back into optical signals via light emitters. The intermediate opto-electronic layers are sometimes referred to herein as (nonlinear) opto-electronic layers.

In between opto-electronic layers are optical layers. These optical layers modulate and mix optical signals from the light emitters of opto-electronic layers to the photodetectors of other opto-electronic layers. These optical layers each rely on a combination of free-space propagation and one or more optical elements to that modulate the intensity and/or spatial distribution of the light. These elements typically only affect the light linearly and so the intermediate optical layers are referred to herein as linear optical layers. The intermediate optical layers may include additional electronic, optical, or mechanical components that can be used to control the modulation of light by the optical elements.

In other embodiments, the multilayer opto-electronic neural network comprises a set of opto-electronic and optical layers as described previously. These include a read-in layer, a read-out layer, nonlinear opto-electronic layer(s), and linear optical layers. In these embodiments, neural network features such as recurrence and/or skip layers can be implemented. In these embodiments, the system may be arranged physically such that at least one optical linear layer redirects light from one or more opto-electronic layers onto multiple opto-electronic layers. Alternatively, signals from opto-electronic layers may be transmitted directly to other opto-electronic layers. This transmission may be implemented with optical fibers, electrical wires, or some other form of signal transmission that does not include mixing of signals as with the linear optical layers. Embodiments including at least some of these features are referred to herein as non-sequential.

It is noted here that the aforementioned layers may physically be grouped into different combinations without changing the functionality of the layers. An example of a combination is a nonlinear opto-electronic layer may be adhered to an optical linear layer to form a combined layer. Functionally this combined layer performs the functions of the individually composed layers in a sequential manner. Additional functions may be added to the combined device that do not impact the designed mathematical operations that are computed by the multilayer opto-electronic neural network. An example of an additional function is the use of light or electronic modulation of the stored weight values within a nonlinear opto-electronic layer and/or linear optical layer. The storage of these weight values may be used, for example, to implement weights for a recurrent neural network.

The transformation of a set of input signals to a set of output signals refers to one cycle of operation for the device. There may be more than one set of signals processed by the multilayer opto-electronic neural network concurrently. The number of read-ins and read-outs per second can be understood as the framerate of the opto-electronic computing device. Multilayer opto-electronic neural network read-in and read-out operations will typically require the use of a number of possible electronic devices, including storage systems, displays, computers, controllers, or other electronic components or devices. For some embodiments, additional electronic signals such as a electronic clocking signal will be used by some or all of the opto-electronic layers. In these embodiments, external electronic devices may be used to generate and/or distribute these signals. These additional electronic devices may also be combined and integrated in a suitable circuit.

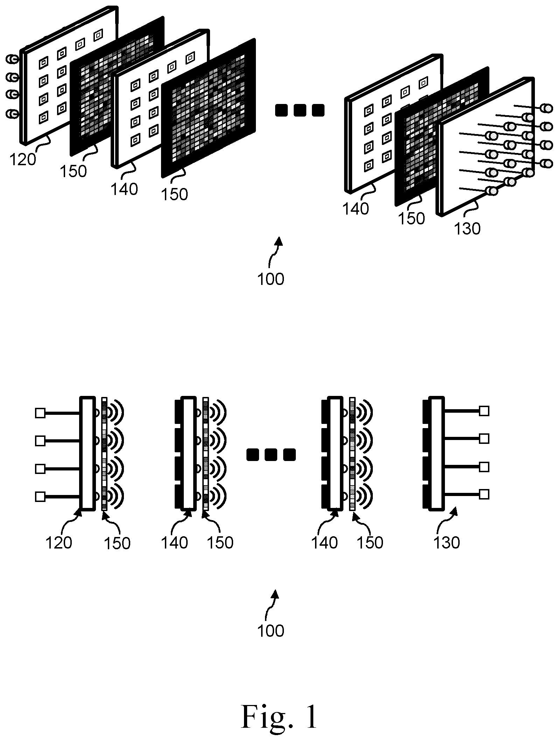

**FIG. 1** schematically depicts one embodiment of a multilayer opto-electronic neural network **100** that is used to compute a series of linear and nonlinear mathematical operations in a manner similar to an artificial neural network. In this embodiment, sets of electronic signals are read-in to the input layer and are then converted to optical signals. The signals are then iteratively modulated optically and electronically to perform a programmed set of computation ins. The output layer converts optical signals to electronic signals for read-out.

The top of **FIG. 1** depicts a schematized isometric view of the computing device **100** that provides a multilayer opto-electronic neural network. The bottom of **FIG. 1** depicts a top-down view of the schematized computing device **100**. Included in this embodiment is the read-in layer **120**, followed by a series of alternating linear optical layers **150** and nonlinear opto-electronic layers **140**, here implemented as opto-electronic processing boards, and the read-out layer **130**. The alternating linear optical layers **150** and nonlinear opto-electronic layers **140** are variable in number, with a minimum of two optical layers **150** and one opto-electronic layer **140**. In the embodiment represented in **FIG. 1**, ellipses represent the variable number of intermediate optical and opto-electronic layers **140**, **150** that may be present. The organization of layers in the embodiment of the computing device **100** shown progresses from left to right in the depicted **FIG. 1****.**

In embodiments of the multilayer opto-electronic computing device **100** the mathematical operations are performed on sets of synchronized signals that are initially presented to the read-in layer **120**. The read-in layer **120** converts the electronic signals received into optical signals by powering light emitters. A linear optical layer **150** modulates the emitted optical signals originating from the read-in layer **120**. The light output of the optical layer **150** is detected by photodetectors on the photodetector side of nonlinear opto-electronic layer **140**. The nonlinear opto-electronic layer **140** converts the optical signals back to electronic signals. A nonlinear mathematical operation and/or signal amplification is typically performed electronically within the opto-electronic layer **140** and these signals are then converted back to optical signals with light emitters. The optical signals from **140** are modulated by another linear optical layer **150** in the manner described above. The previous two steps of a nonlinear opto-electronic layers **140** and linear optical layers **150** are repeated a variable number of times. Light modulated by the last linear optical layer **150** in the network is photo-detected by the read-out layer **130**. The output layer may perform additional operations before outputting electronic signals. The variable number of intermediate optical layers **150** and opto-electronic layers **140** depend on the programmed set of linear and nonlinear mathematical operations for the multilayer opto-electronic neural network **100**.

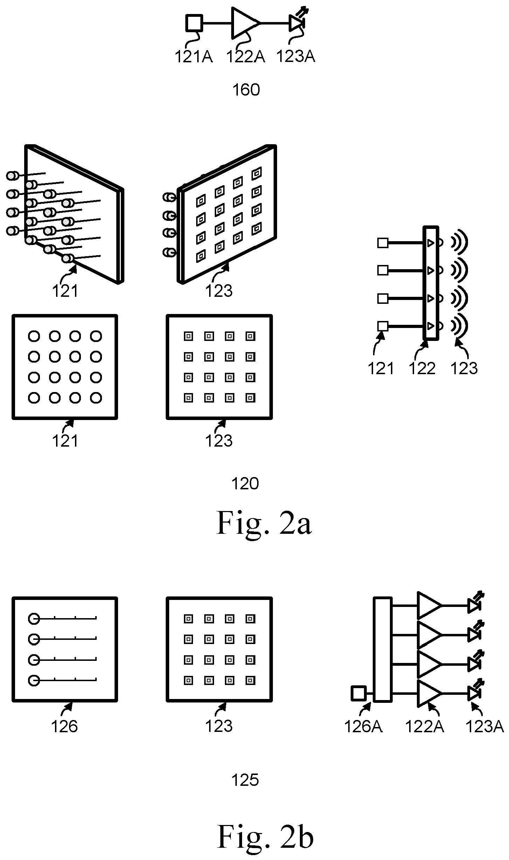

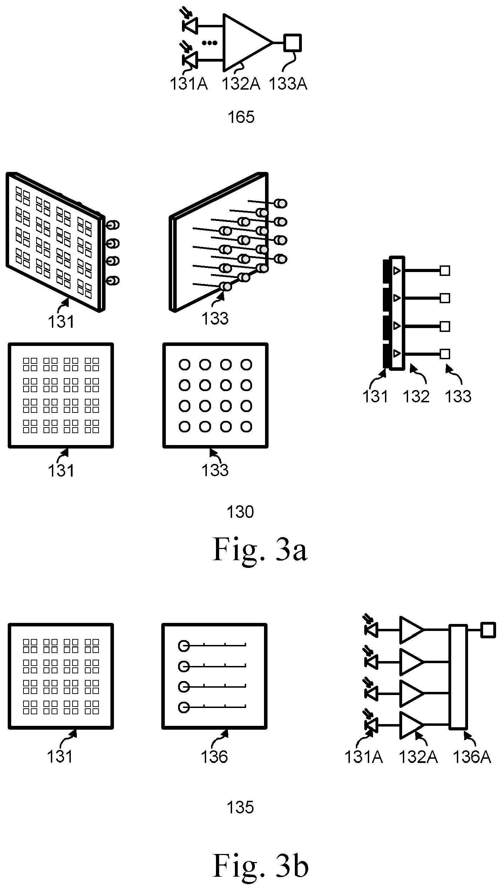

The input layer processes sets of electronic inputs and converts them to optical signals by powering light emitters. One embodiment of the read-in layer **120** is depicted schematically in **FIG. 2a**. This embodiment of the read-in layer **120** is a planar opto-electronic board with an input side **121** for electronic signals and an output side **123** for optical signals. Additional electronic operations **122** are implemented on or within the board. The read-out layer **130** is depicted in **FIG. 3** isometrically, in a frontal view, and from a top-down view. The additional electronic operations **122** are depicted/visible (only) in the top-down view.

The read-in layer **120** may be implemented electronically as a two-dimensional array of individual opto-electronic units **160**. In embodiments implemented with individual opto-electronic units **160**, each unit performs each of the separate operations of the read-in layer **120** on an individual input. The operations performed by an individual opto-electronic unit **160** may include read-in **121A**, amplification and electronic processing by electronic circuitry **122A**, and output onto a light emitter **123A**. In other embodiments, several opto-electronic units **160** may be grouped together onto a single integrated circuit.

The following optional features can be applied in the computing device **100:**
Output normalization of each individual electronic layer can be performed. To this end, a global scaling value may be used to globally amplify or reduce the output of each intermediate electronic layer to maintain consistent signal levels in systems with several (greater than 3) total electronic layers.

Bias terms in individual intermediate electronic layers may be tied to constant values emitted by the previous electronic layer, ensuring that optical losses are similar for both values of individual neurons and the contributing biases before amplification.

Independent individual amplification units with high speed electronic components may be used to create an intermediate layer with more neurons with a constant response time for the whole layer.

High-speed operation of the multilayer opto-electronic neural computing system is possible as all neurons within an electronic layer are addressed simultaneously at the speed of light by the previous electronic and optical layers.

A clock signal for the analog input and the same clock signal can be delayed by the depth of the network for the analog output layer to allow for high speed operation at a time scale similar to the response time of an individual electronic layer regardless of the total depth of the multilayer opto-electronic neural computing system.

Positive and negative contributions to an individual unit can implement a mathematical operation similar to the rectified linear function when outputted to a light emitting diode.

Pooling layers, an example of which includes max pooling, average pooling, and global pooling, can be implemented a max in an electronic circuit to the outputs of two or more photodetectors

The computing device **100** can be integrated using but not limited by a complementary metal oxide semiconductor process, whereby the detection, emission and the intermediary processing units can be combined in a same package.

Another embodiment of read-in layer **125** is depicted schematically in **FIG. 2b**. This embodiment of the read-in layer **125** is a planar opto-electronic board with an input side for electronic signals **126** and an output side **123** for optical signals, both shown with a frontal view. In this embodiment, multiple inputs of a single input set are read in and routed sequentially through the same input cable **126A.** The inputs are buffered individually into electronic amplification and processing by electronic circuitry **122A**, and output onto light emitters **123A**.

The output layer converts sets of optical signals to electronic signals and transmits the signals out of the device. One embodiment of the read-out layer **130** is depicted schematically in **FIG. 3a**. This embodiment of the read-out layer **130** comprises a planar opto-electronic board with an input side **131** for receiving optical signals and an output side **133** for read-out. Additional electronic operations **132** are implemented on or within the board. The read-out layer **130** is depicted in **FIG. 3** isometrically, in a frontal view, and from a top-down view. The additional electronic operations **132** are depicted/visible (only) in the top-down view.

The read-out layer **130** may be implemented electronically as a two-dimensional array of individual opto-electronic units **165**. In embodiments implemented with individual opto-electronic units **165**, each unit performs each of the separate operations of the read-out layer **130** on an individual optical signal group. An individual optical signal group includes one or more optical signals that are processed together electronically to generate one or more electronic signals. An example of an individual signal group is two optical signals that are subtracted from each to generate a single electronic signal. The operations performed by an individual opto-electronic unit **165** may include photodetection by photodetectors **131A**, amplification and electronic processing by electronic circuitry **132A**, and electronic read-out by connectors **133A**. In other embodiments, a number of opto-electronic units **165** may be grouped together onto a single integrated circuit.

The electronic circuitry can be configured to perform different, preferably non-linear, processing steps on an electronic signal received (e.g. after pre-processing) from a photodetector:
In an embodiment, said electrical signal is combined such that the electrical signals of two nearby photodetectors on an array are combined with analog electronic circuit implementing a subtraction function.

In a further embodiment, said electrical signal is combined such that the electrical signals of two or more nearby photodetectors on an array are combined with analog electronic circuit implementing a maximum value function.

In a further embodiment, said electrical signal is combined such that the electrical signals of two or more nearby photodetectors on an array are combined with analog electronic circuit implementing an average value function.

In a further embodiment, said electrical signal is combined such that the electrical signal of four nearby photodetectors on an array are combined with analog electronic circuit implementing a complex number encoding function.

In a further embodiment, said electrical signal is combined such that the electrical signals of one or more nearby photodetectors are also combined with and stored with electrical signals from previous processing stages.

Fully connected optical connection layers may be implemented with an amplitude mask and a particular arrangement of the amplitude mask and emitters. Convolutional optical connection layers may be implemented with an amplitude mask and a particular arrangement of the amplitude mask and emitters. Local 2D Fourier transforms can be implemented with a particular arrangement of the lenses and emitters. Non-binary weights to amplitude masks can be implemented with dithering. Sparsely connected optical connection layers can be implemented with custom designed height-maps with a differentiable raytracer.

Training of weights for individual optical masks can preferably include the response function for each individual electronic mask.

The computing device **100** can implement current neural network architectures including transformers, diffusion models, normalizing flows, geometric deep learning, and graph neural networks, and others.

The above embodiments can be combined with different embodiments presented in the following.

Another embodiment of the read-out layer **135** is depicted schematically in **FIG. 3b**. This embodiment of the read-out layer **135** is a planar opto-electronic board with an input side **131** for receiving optical signals and an output side **136** for generated optical electric signals, both shown with a frontal view. In this embodiment, multiple read-out signals are routed out sequentially through the same output cable **136A**. The photodetection **131A** and electronic amplification and processing **132A** are as in read-out layer **130**, but output values are buffered individually before read-out onto the same output cable.

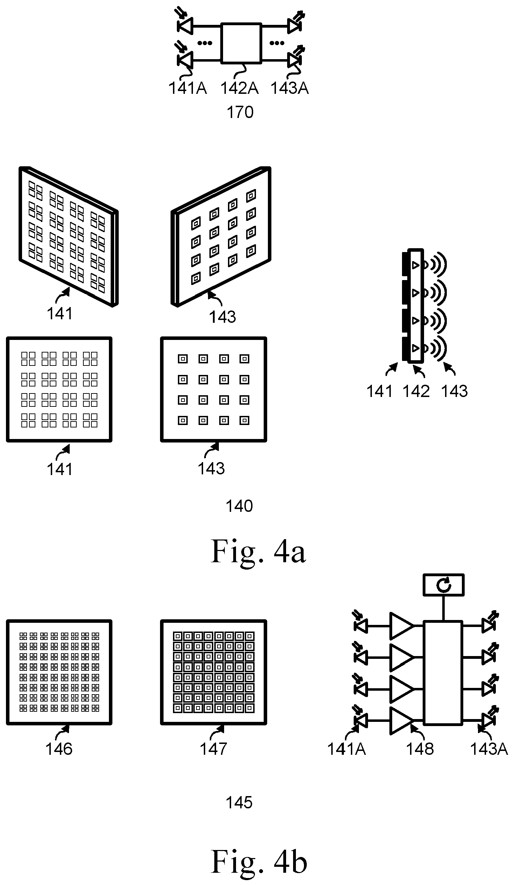

Nonlinear opto-electronic layers apply nonlinearities to signals in a multilayer opto-electronic neural network **100**. These layers typically detect optical signals with photodetectors, amplify and process these signals electronically, and then output the signals optically with light emitters. One embodiment of a nonlinear opto-electronic layer **140** is depicted schematically in **FIG. 4a**. This embodiment of the nonlinear opto-electronic layer **140** is a planar opto-electronic board with an input side for optical signals **141** and an output side **143** for optical signals. Additional electronic processing units **142** are implemented on or within the board. The input side **141** is depicted in **FIG. 4** isometrically, in a frontal view, and from a top-down view. The additional electronic operations performed by the electronic processing units **142** are depicted from a top-down view in **FIG. 4**. The output side **143** is depicted in **FIG. 4** isometrically, in a frontal view, and from a top-down view.

As can be seen in **FIG. 4A**, the electronic processing units **142** pass electrical signals directly from the input side **141** (with the photodetectors) to the output side **143** (comprising the light emitters). The electronic processing units **142** comprise connection elements that are directed perpendicular to a plane of the opto-electronic layer **140**. In embodiments, essentially all connection elements are directed perpendicular to the opto-electronic layer **140**. In particular, in an embodiment, at least half of a total wiring between input side **141** and output side **142** is implemented through connection elements that are perpendicular to a plane of the board.

A nonlinear opto-electronic processing board **140** may be implemented electronically as a two-dimensional array of individual opto-electronic units **170** that are mounted on a board. In embodiments implemented with individual opto-electronic units **170**, each unit performs each of the separate operations of the opto-electronic processing board **140** on an individual optical signal group. An individual optical signal group includes one or more optical signals that are processed together electronically to generate one or more optical signals. The operations performed by an individual opto-electronic unit **170** may include photodetection by photodetectors **141A**, amplification and electronic processing **142A**, and output onto a light emitter **143A**. In other embodiments, a number of opto-electronic units **170** may be grouped together onto a single integrated circuit.

Another embodiment of an opto-electronic processing board **145** is depicted schematically in **FIG. 4b**. This embodiment of an opto-electronic processing board **145** is a planar opto-electronic board with an input side **146** for optical signals and an output side **147** for optical signals, both shown with a frontal view. In this embodiment, photodetection of optical signals by photodetectors **141A** and light emission by light emitters **143A**, e.g., LEDs, are unchanged. In electronic processing step **148**, in addition to the amplification and processing in **142A**, updatable memory values are used to modulate the electronic signal. These memory values may be used to store the signals of previous input sets, for example, to implement weights of a recurrent neural network.

In another embodiment signals from individual layers are split optically and propagated to multiple opto-electronic layers, referred to herein as skip layers.

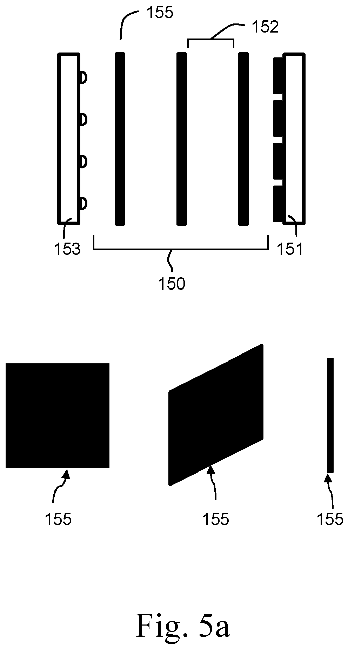

A linear optical layer **150** is depicted schematically in **FIG. 5a**. It redirects and mixes optical intensity signals from light emitters, performing the role of a weight matrix in a neural network. The optical layer **150** comprises a series of free space **152** and optical elements **155**. Light originating from light emitters on an output layer implemented as a source board **153** (such as from **123** or **143**, referred to herein as source board) is modulated within the linear optical layer **150** and detected on photodetectors on sensor board **151** (such as from **131** or **141**, referred to herein as sensor board).

The exact distances between the components within a linear optical layer determine the overall light distribution, where free space **152** causes light from light emitters to spread and optical elements **155** modulate the spreading pattern and/or intensity of the light as it interacts with the optical element **155.**

In some embodiments, light from a single source board **153**, also referred to as output layer, is projected onto the photodetectors of a single sensor board **151,** also referred to as input layer. In other embodiments, as is depicted in **FIG. 1b** or **FIG. 1c,** a linear optical layer **150** may involve more than a single source board and/or single sensor board. An example of a such a use includes the implementation of recurrent neural layers and/or skip layers.

In some embodiments, the free space **152** consists of an air gap or vacuum between optical and/or opto-electronic components. In some embodiments, the free space may be partially or wholly filled by a uniform, transparent material such as glass or plastic. This material used changes the propagation distance of the free space required by a factor of the refractive index of material. Embodiments may use this transparent material to control distances between optical and/or opto-electronic components, for structural support of the assembly, or to improve the performance of the linear optical layer **150.**

In preferred embodiments, the optical elements **155** are two-dimensional flat or mostly flat plates that include complex features that in regions of variable thickness or opacity. These complex features are used to encode the weights the optical connection matrix between an source board **153**, acting as output layer, and an sensor board **151.** In many embodiments, optical elements **155** within a multilayer opto-electronic neural network **100** consist of a thin plate made of a material such as a plastic or glass with a structured material on one or both sides. The structured material modulates the amplitude and/or phase of light that passes through the thin plate. The structured material may consist of one or more of the following in spatially varying patterns in two dimensions:
a thin layer of an opaque material such as a metal,
a thin layer of a reflective material such as a metal,
a thin layer of an opaque material of variable thickness such as a dye,
a layer that can be induced between opaque and transparent states such as an electrochromic material or a phase-change material,
a thin layer of a transparent material of variable thicknesses such as glass or plastic,
a dynamic variable-thickness layer of a transparent material such as liquid-phase optofluidic material.

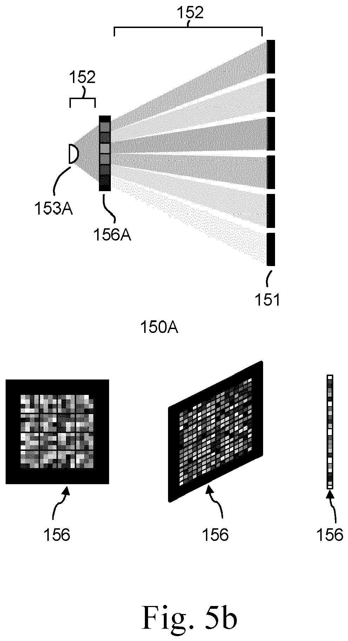

One embodiment of an optical layer **150** makes use of an amplitude mask **156** as an optical element that implements a fully connected layer of a neural network is depicted in **FIG. 5b****.** The amplitude mask **156** is a two-dimensional plate with spatially varying transparency. Light passing through this amplitude mask **156**, implemented as a plate, has its intensity reduced by the local transparency level. A portion of the optical layer **150A** is shown in a top-down view. In this depiction, a single light emitter **153A** of the source board **153** spreads light through free space **152** onto the corresponding region of the amplitude mask **156A**. This light is locally modulated by the amplitude mask region **156A** by a matrix of values. This matrix of values corresponds to the multiplicative weights of the fully connected neural network layer. The light continues to spread in a second free space region **152** onto the photodetectors on the sensor board **151.**

The inverse ratio of the free space **152** closest to the emitter to the total propagation distance between the source board **153** and the sensor board **151** is the magnification factor of the weight matrix encoded on the amplitude mask regions **156A**. The size of the light emitters **153A**, the free space regions **152**, and the size of the photodetectors **151A** determine the highest possible light emitter **153A** and photodetector **151A** spatial density.

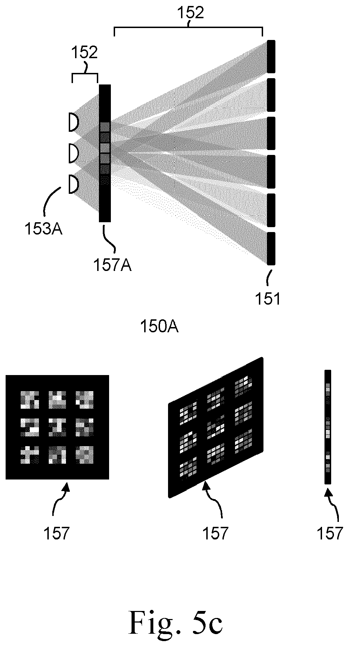

Another embodiment of an optical layer **150** makes use of an amplitude mask **157** as an optical element that implements a convolutional layer of a neural network is depicted in **FIG. 5c**. The overall amplitude mask structure is largely the same as **156**. In this embodiment, the regions of an amplitude mask **157** correspond to the kernels of a convolutional layer. A portion of the optical layer **150A** is shown in a top-down view. Similar to the previous embodiment, light propagates through a free space region **152**, interact with the amplitude mask **157,** then propagates through another free space region **152** before being detected on the sensor board **151.** In this embodiment, light from several light emitters **153A** interact with the same region of the amplitude mask **157A**, and the spatially shifted interaction between the groups of light emitters **153A** and the amplitude mask regions **157A** implements the equivalent of a convolution mathematical operation. The interaction of several amplitude mask regions **157A** with the same light emitters **153A** results in a set of operations equivalent to a convolutional layer of a neural network. The size of the amplitude mask regions **157A**, the density of light emitters **153A**, and the density of the photodetectors **151A** determine the size and density of the convolutional kernels.

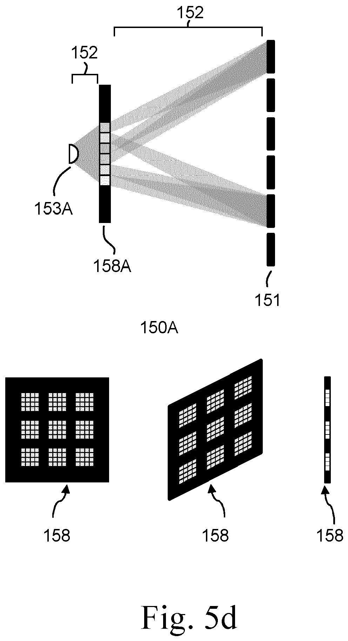

Yet another embodiment of an optical layer **150** that makes use of masks **158** with varying thickness as an optical element that implements weight matrices for a Graph Convolutional Neural Network (GCNN) layer is depicted in **FIG. 5d**. This embodiment of an optical layer **150** includes a first and a second free space region **152**, along with at least one mask **158** that is a two-dimensional diffractive optical element. The mask **158** is typically made of a transparent material and has locally thicker and thinner regions that enable local control of the geometric phase of transmitted light. A single light emitter **153A** is depicted with a region **158A** of a mask that is used to control the distribution of light to a few photodetectors on the sensor board **151.**

Weight matrices for a GCNN layer can be mimicked with masks that are designed to focus light only in some chosen directions. In some embodiments, amplitude masks **156** may be used in concert with the masks **158** to implement the desired weight matrices. Unlike the previous embodiments, the weight matrices for a trained GCNN layer cannot be easily transferred to the masks **158** and possibly amplitude masks **156**.

The masks **158** may be designed using a differentiable pathtracer that enables one to get a derivative over the parameters that govern the structure of the lens. These parameters can be, but are not limited to, the discretized pixel structure of the lens, factors of a polynomial, describing the thickness of the lens, parameters of a neural network for the estimation of a signed distance function or coefficients of eigenfunctions of the wave propagation operator. This masks **158** together with an amplitude mask **156** can be used to create the connection matrix multiplied with the weight matrix *A W*, and thus connect the incoming signal to the outgoing layer just like in a dense layer or matrix multiplication. In a 2-dimensional structure one can mimic the node features by assigning each node its own row, or column, with the outgoing light in one row/column being the features of this node.

To achieve a connection between the light emitters and the photosensitive elements, a specifically designed lens can be used. In this text lens refers to some material that is inserted into the lightpath and alters the path of the light in a desired way. This lens can be implemented as a heightmap, e.g. a slab of a material with spatially variable thickness and with a refractive index different from the surrounding propagation medium (usually air).

Modern physical renderers can create realistic images when given the geometry of a scene. To optimize geometry, light patterns, lenses, or something else in this scene in a feasible time, one needs to calculate the derivative of some loss function over the optimization parameters. Raytracers that are able to calculate the derivative over the scene parameters have been developed. [1][3]. These renderers make it possible to optimize the surface of a lens to create a desired caustic pattern [2].

With such a differentiable raytracer it is possible to create a lens that maps every input light emitter to multiple photosensitive elements with different intensities. The intensities of these connections are fixed, once the lens is created and act as a matrix multiplication of the incoming light emitter array with some connection matrix.
[1] Wenzel Jakob, Sebastien Speierer, Nicolas Roussel, and Delio Vicini. 2022. Dr.Jit: A Just-In-Time Compiler for Differentiable Rendering. In Transactions on Graphics (Proceedings of SIGGRAPH) 41(4).
[2] Merlin Nimier-David, Delio Vicini, Tizian Zeltner, and Wenzel Jakob. 2019. Mitsuba 2: A Retargetable Forward and Inverse Renderer. In Transactions on Graphics (Proceedings of SIGGRAPH Asia) 38(6).
[3] Li et al, 'Differentiable Monte Carlo Ray Tracing through Edge Sampling', SIGGRAPH Asia 2018

In other embodiments, the optical elements consist of shaped glass or plastic and/or mirrors structured to redirect divergent light towards spatially defined regions of the succeeding electronic layer. These optical elements may be one or more lenses, lenslet arrays, prisms, and/or mirrors arranged between two electronic layers to act as a light-collection system to increase light collection on light-sensitive regions of the succeeding electronic layer.

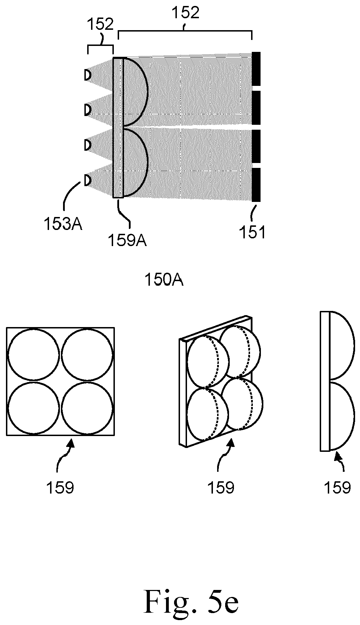

One embodiment of an optical layer **150** using such an optical element is shown in **FIG. 5e**. Here, a lenslet array **159** is used in a small region of the optical layer **150A**. Groups of light emitters **153A** are associated with individual lenslets. The degree of mixing in between groups of light emitters **153A** onto the sensor board **151** depends on the focal length of the individual lenslets and the free space regions **152**. In the case the focal length is equal to each of the two free space regions **152**, the Fourier transform of the groups of light emitters are projected onto the corresponding photodetectors on the sensor board **151.**

Another embodiment using lenslets arrays may use two sets of lenslet arrays **159** in conjunction with an amplitude mask **156**. When the lenslet arrays **159** and free space regions **152** are arranged in a 4f optical relay configuration and the amplitude mask **156** is placed in the Fourier plane of the light emitters **153**, the optical layer **150** may be used to implement a convolution operation in a neural network.

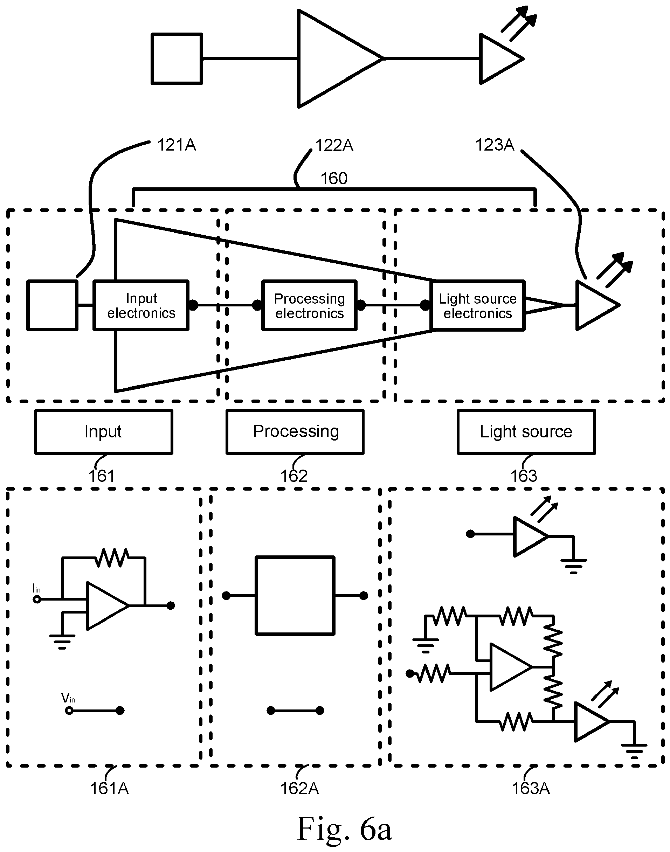

Some embodiments of the electronics used within the input layer **120** are depicted in **FIG. 6a****.** In the input layer, the operations performed are read-in via connectors **121A**, amplification and electronic circuitry **122A**, comprising an operational amplifier, and output onto a light emitter **123A**. The overall basic independent unit that performs those operations is an individual opto-electronic unit **160**. Within the opto-electronic units **160**, electronics are typically used for each of the three steps performed by the input layer. For the read-in via connectors **121A**, input electronics **161** are used to convert electronic signals to a mode usable within the device. Processing electronics **162** apply any required amplification or other electronic processing **122A** (such as signal normalization or output timing). Light source electronics **163** are used to power or modulate the light emitter **123A**.

In embodiments of the multilayer opto-electronic neural network **100** the electronic input signal can be either current valued or voltage valued. Example embodiments of Input electronics **161A** include a transimpedance amplifier (top) for converting a current valued signal to a voltage valued signal or a simple wire (bottom) in the case of a voltage valued signal. Example operations of the processing electronics **162A** may include signal amplification, signal normalization, signal clocking, or other operations depending on the needed functionality and is depicted schematically in the figure with a box. Example electronics for the light source electronics **163A** include a simple wire (top) if the signal from the Processing electronics **162A** is current controlled, or requires a voltage controlled current source (VCCS, bottom) if the signal is voltage controlled.

In most embodiments, the light emitter is a linear current-controlled light source with an approximately linear emission brightness with applied current. Example light emitters include light emitting diodes (LEDs) or other fast responding (sub-microsecond) light sources. The same or similar light emitters are used for other components described herein for the multilayer opto-electronic neural network **100**.

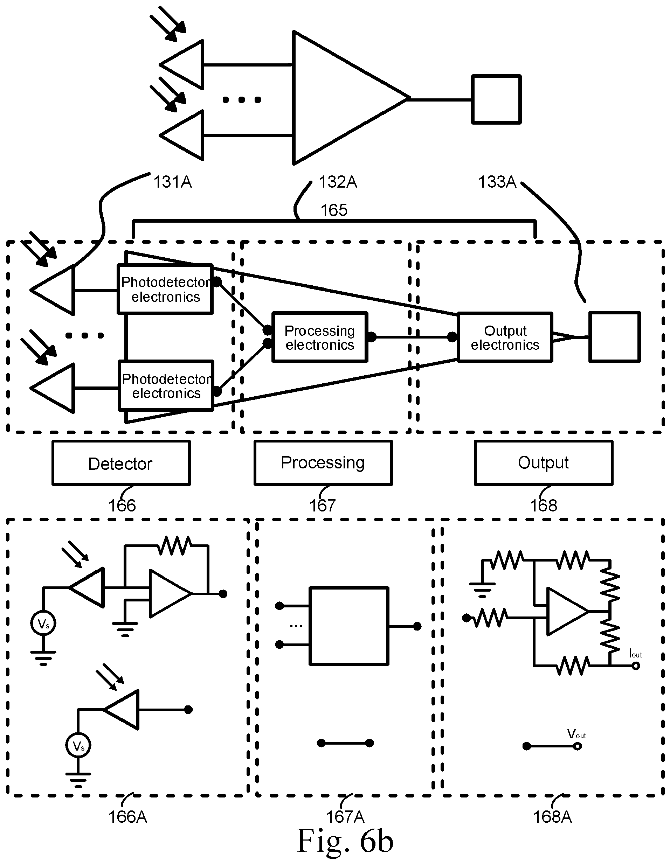

Some embodiments of the electronics used within the read-out layer **130** are depicted in **FIG. 6b****.** In the output layer, the operations performed are photodetection **131A**, amplification and electronic processing **132A**, and read-out **133A**. The overall basic independent unit that perform those operations is an individual opto-electronic unit **165**. Within the opto-electronic units **165**, electronics are typically used for each of the three steps performed by the input layer. For the photodetection **131A**, photodetector electronics **166** are used to convert optical signals to electronic signals. Processing electronics **167** apply any required amplification or other electronic processing **132A** (such as signal combination from multiple photodetectors or signal amplification). Output electronics **168** are used to process the electronic signals for read-out **133A**. Although not shown in **FIG. 6b****,** the processing electronics **167A** comprises connection elements that are perpendicular to a plane of a board that is holding the detectors.

Example embodiments of photodetector electronics **166A** include a transimpedance amplifier (top) for converting a current valued signal to a voltage valued signal or a simple wire (bottom) if processing electronics use a current valued signal. Example operations of the Processing electronics **167A** may include signal combination, application of a nonlinearity, signal amplification, signal normalization, signal clocking, and/or other operations depending on the needed functionality and is depicted schematically in the figure with a box. Example electronics for the Output electronics **168A** include a voltage controlled current source (VCCS, top) if the required output signal should be current controlled or a simple wire (bottom) if the required output signal should be voltage controlled.

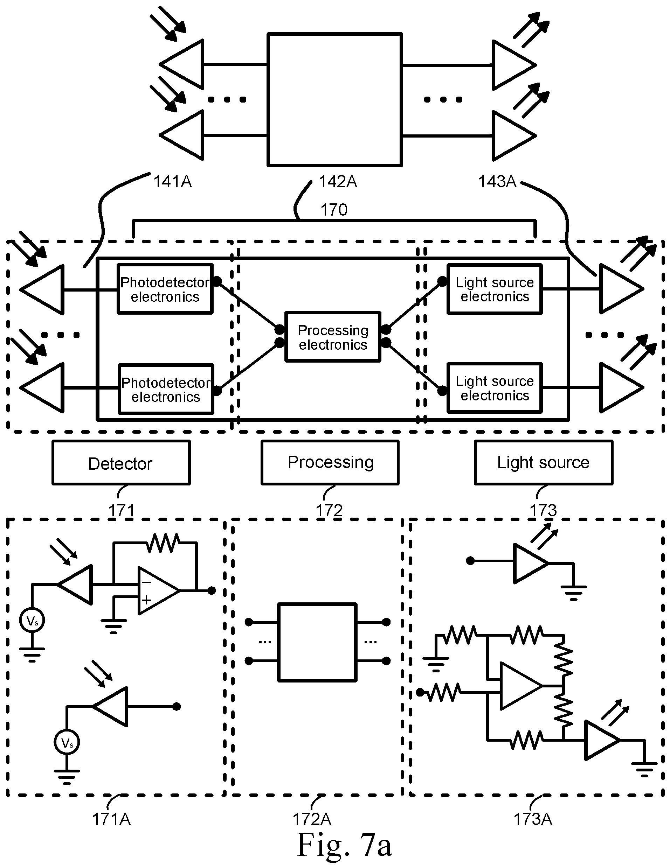

Some embodiments of the electronics used within the nonlinear opto-electronic layers **140** are depicted in **FIG. 7a**. In the nonlinear opto-electronic layers, the operations performed are photodetection **141A**, amplification and electronic processing **142A**, and output onto a light emitter **143A**. The overall basic independent unit that performs those operations is an individual opto-electronic unit **170**. Within the opto-electronic units **170**, electronics are typically used for each of the three steps performed by the input layer. Photodetector electronics **171** are used to convert optical signals to electronic signals. Processing electronics **172** apply any required amplification or other electronic processing **142A** (such as signal normalization or output timing). Light source electronics **173** are used to power or modulate the light emitter **143A**.

Example embodiments of photodetector electronics **171A** include a transimpedance amplifier (top) for converting a current valued signal to a voltage valued signal or a simple wire (bottom) if processing electronics use a current valued signal. Example operations of the Processing electronics **172A** may include signal combination, application of a nonlinearity, signal amplification, signal normalization, signal clocking, and/or other operations depending on the needed functionality and is depicted schematically in the figure with a box. In the Processing electronics **172A,** there are often different numbers of inputs versus outputs. Example electronics for the light source electronics **173A** include a simple wire (top) if the signal from the Processing electronics **172A** is current controlled, or requires a voltage controlled current source (VCCS, bottom) if the signal is voltage controlled.

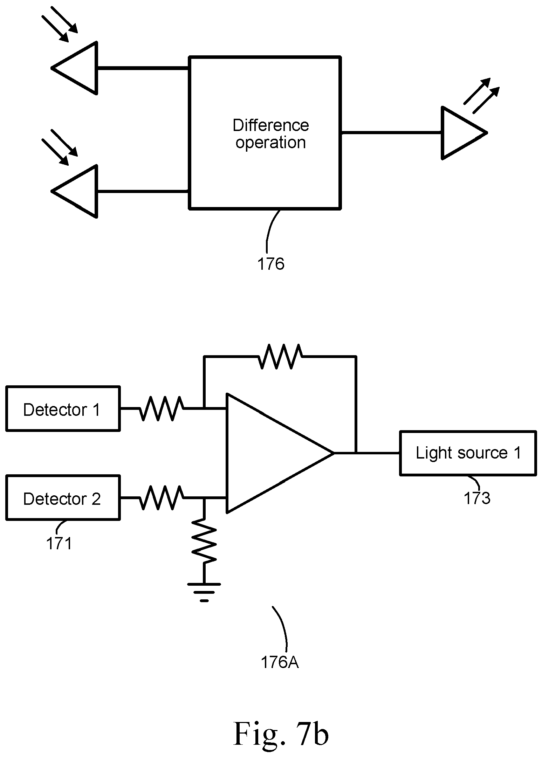

Within the nonlinear opto-electronic layers **140** one required operation performed is the application of nonlinearity, which is essential for the successful function of artificial neural networks. These operations are performed electronically in the Processing electronics **172A**. Several embodiments of electronics nonlinearities that are analogous or equal to nonlinearities used in artificial neural networks are highlighted in **FIG. 7b****-e**.

**FIG. 7b** illustrates an embodiment of an operation analogous to a rectified linear function, the most common function used within modern artificial neural networks. A rectified linear function takes a real valued number and returns itself if the value is positive and zero otherwise. Amplitude encoded light signals from incoherent light emitters cannot represent negative numbers natively and the weight values encoded within the linear optical layers **150** are typically equivalent to positive values. Mathematically, the difference between two positive numbers may be used to represent a real valued number. Within the multilayer opto-electronic neural network **100** a real number may be represented by taking the difference of two photo-detected optical signals, the relationship depicted schematically with the difference operator **176.** An embodiment of this electronic circuit **176A** implements the difference function in voltage values from two photodetectors **171** to power one light source **173.** In this circuit an operational amplifier performs this operation along with amplification of the output by appropriately setting the values of the resistors. The differenced output voltage is converted to a current and used to drive a light emitter. As the light emitter cannot emit negative amounts of light, the rectified linear function is automatically applied.

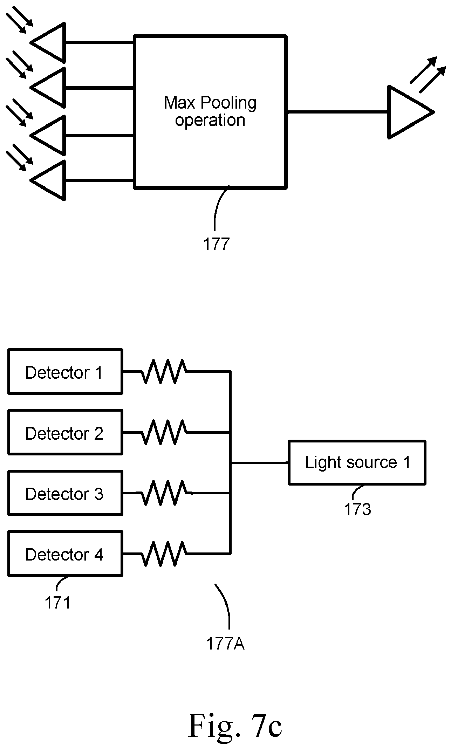

**FIG. 7c** illustrates an embodiment of a pooling operation, a common function used within modern artificial neural networks. A maximum pooling operation returns the highest value out of multiple inputs, depicted schematically in **177** with four inputs. Other pooling operations may also be implemented, such as an average pooling function. An embodiment of this electronic circuit **177A** implements the maximum function in voltage values from four photodetectors **171** to power one light source **173**. The circuit implementing this function requires a resistor for each input, which weights the contribution of the signal and combined into one wire signal.

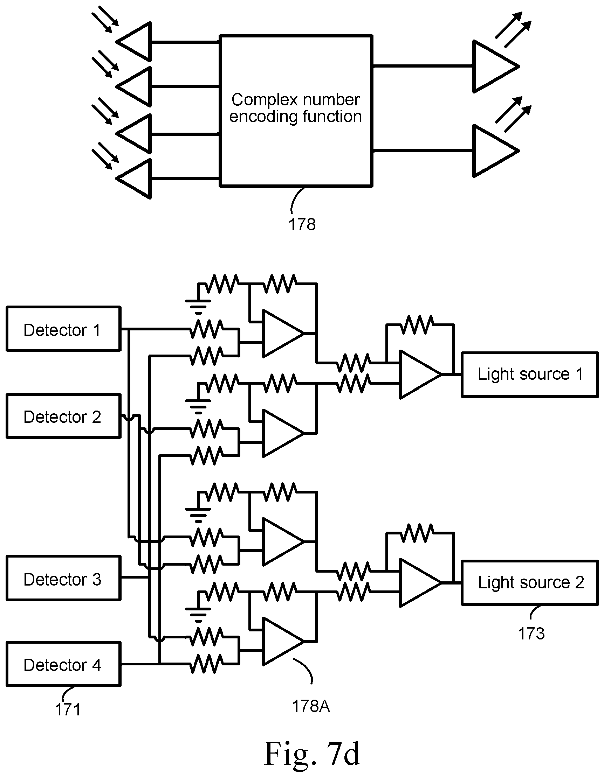

**FIG. 7d** illustrates an embodiment of an operation analogous to a complex rectified linear function, which is used within artificial neural networks encoding complex numbers. A complex rectified linear function takes the positive parts of the real and imaginary parts of the complex number. In most embodiments using a complex rectified linear function, the photodetectors for the four inputs will be arranged in a manner similar to a quadrant photodetector, where each quadrant of the photodetector provides one of the inputs and represents one quadrant of a complex number. In this manner, deflections of a constant light source around the surface of the quadrant photodetector reflects the change in the encoded complex number. This is schematically depicted in **178**. An embodiment of a circuit implementing the complex number encoding from four photodetectors **171** as input into two light sources **173** as output is depicted in **178A**. As with the rectified linear operation, the rectifying function is automatically applied due to the positive valued only output of the light emitter.

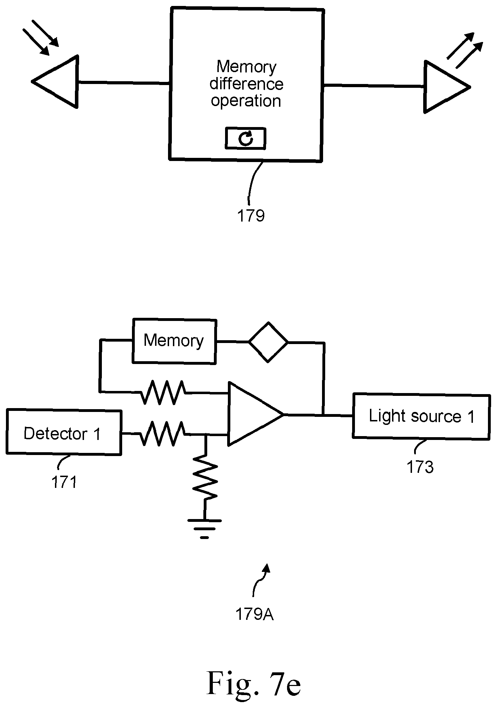

**FIG. 7e** illustrates one embodiment where an electronic memory value may be stored within the processing electronics **172A**. Storage of memory values allows the multilayer opto-electronic neural network **100** to implement recurrent neural networks or include hysteresis for output response based upon past inputs. This concept with one input and one output is depicted schematically with the simplified circuit diagram of electronic circuit **179A** where a small rectangle represents the stored memory value. In one embodiment, an electronic circuit **179A** subtracts the previous output value of the circuit from the current value of the circuit to bias the value of the output.

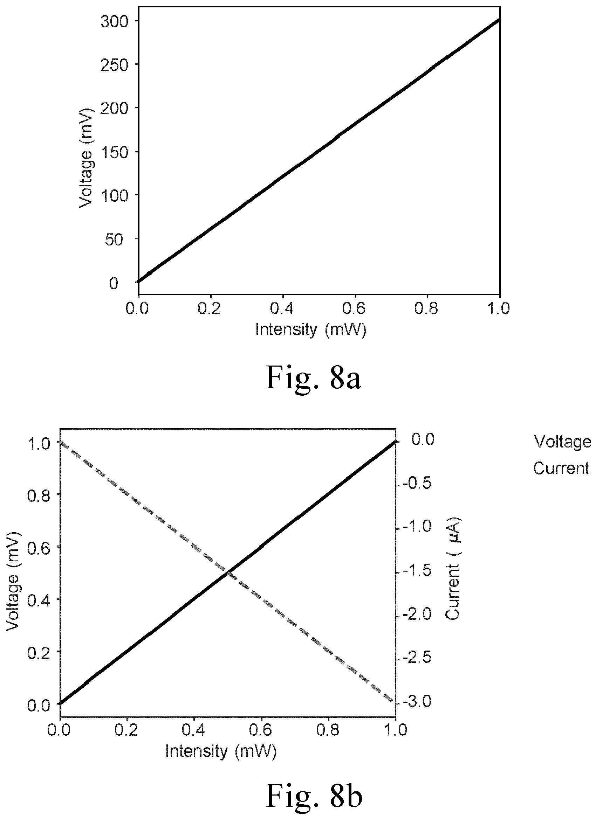

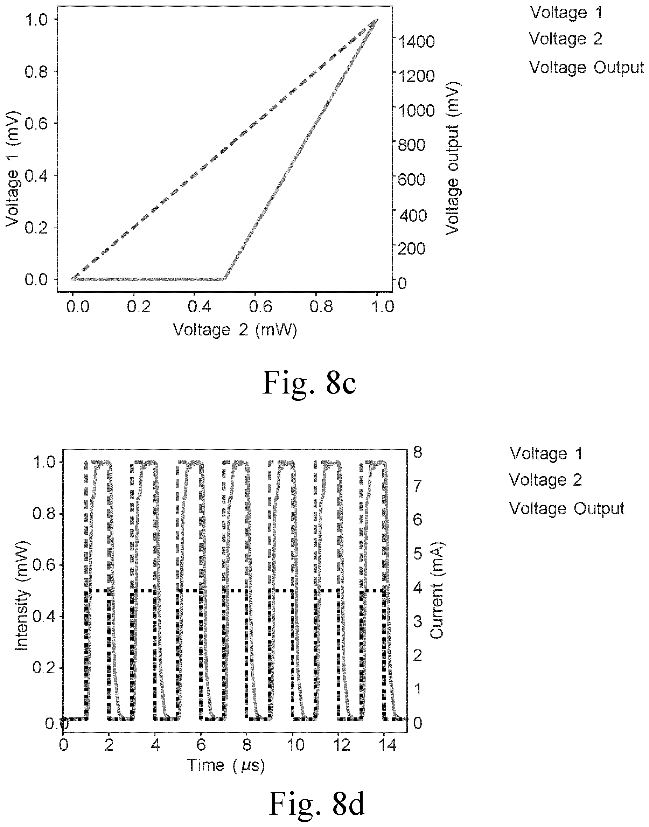

The embodiments of specific circuits described within **FIG. 6** and **FIG. 7**. have several response functions associated with their performance. **FIG. 8a** depicts the voltage after the photodetector electronics **166A** and **171A** in response to an input light intensity including an amplification stage. **FIG. 8b** depicts the voltage in the photodetector electronics **166A** and **171A** in response to an input light intensity without the additional amplification along with the photocurrent from the photodetector. **FIG. 8c** depicts the output voltage from the difference operation from the embodiment in **176A**, which implements a function analogous to a rectified linear function using the difference between two signals, described as Voltage 1 and Voltage 2. An additional amplification stage is also included in the Voltage output. **FIG. 8d** depicts the temporal response curve of Voltage 1 and 2 from the circuit described in **176A**, showing the operation of the nonlinearity in this embodiment at 1 megahertz. Other embodiments can be run at speeds faster or slower than this embodiment, up to speeds in the gigahertz range.

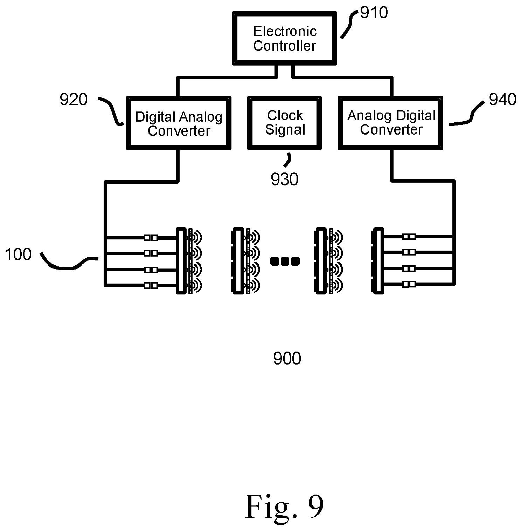

The overall multilayer opto-electronic neural network **100** needs to interface with additional electronics depending on the required function. An overall assembly **900** is depicted in **FIG. 9**. As the device itself does not include long-term memory storage for presentation and storage of data input and output, **FIG. 9** depicts one way the multilayer opto-electronic neural network **100** can be used with additional electronics. These include an electronic controller **910** with on-board memory. This may be but is not limited to a conventional computer, real-time electronic controller, or other device. Additionally, digital analog converters **920** and analog digital converters **940** will typically be required to interface between a digital electronic controller and the multilayer opto-electronic neural network **100**. In some embodiments, a clock signal **930** may be used to assist in timing the inputs and outputs of the multilayer opto-electronic neural network **100** with the rest of the required electronics.

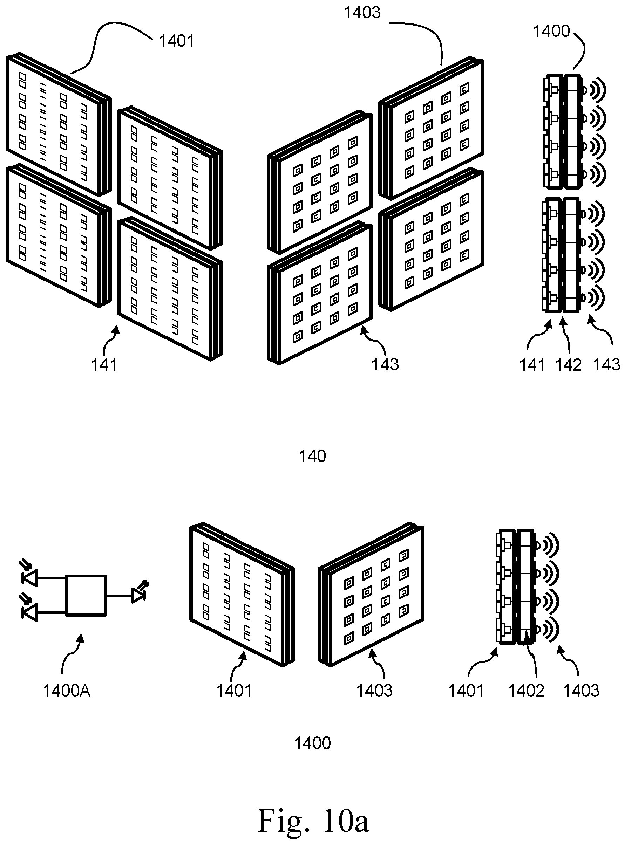

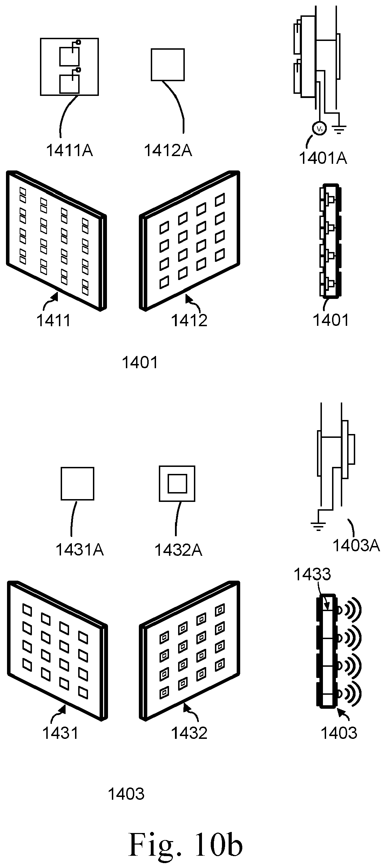

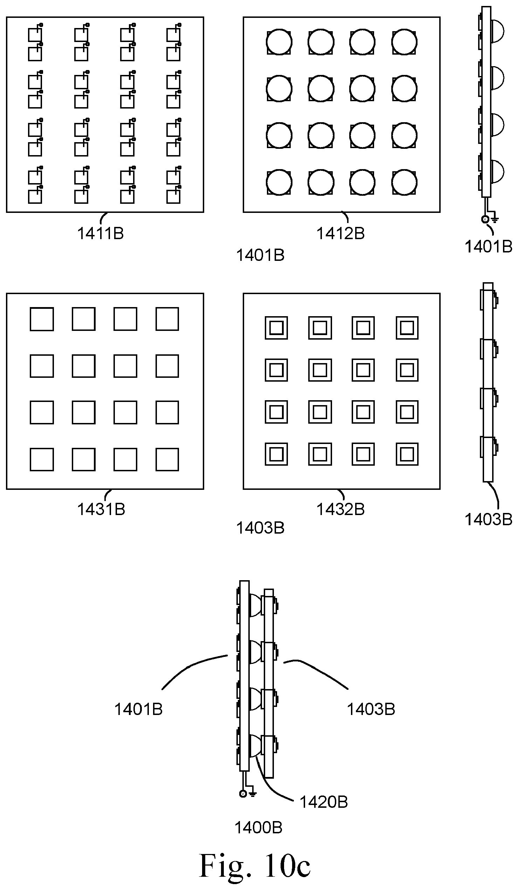

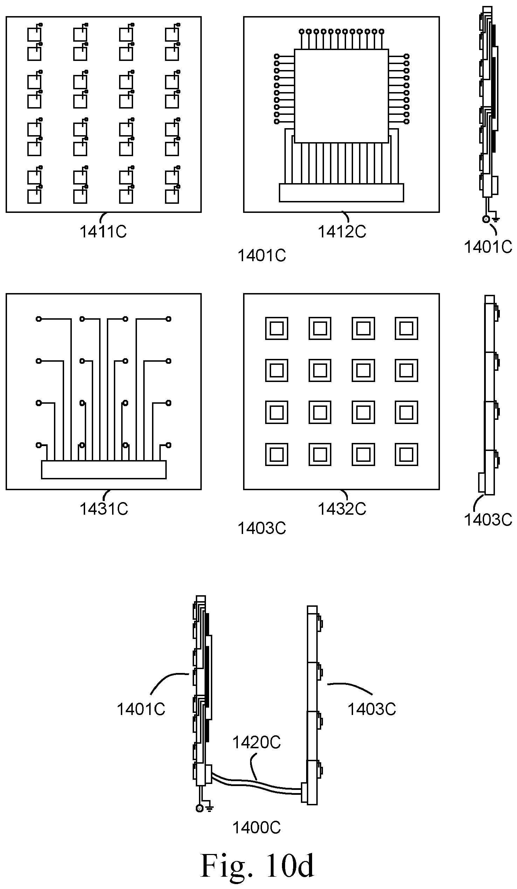

**FIG. 10** schematically illustrates depicts design features of the intermediate opto-electronic layer that enable scale-up of the layer for large numbers of units. It depicts how one embodiment of the intermediate opto-electronic layer from **FIG. 4** may be wired such that computations on the layer are processed and contained spatially local.

A nonlinear opto-electronic layer **140** may be implemented as a two-dimensional array of smaller nonlinear opto-electronic layer subarray **1400** as depicted in **FIG. 10a**. In the depicted embodiment, the functions of the layer may still be separated into input photodetectors **141**, electronic operations **142**, and light emitters **143**, except each nonlinear opto-electronic layer subarray **1400** individually performs these functions. Each nonlinear opto-electronic layer subarray **1400** is a two-dimensional array of individual units **1400A** that is analogous to the individual units **170.** A subarray **1400** is composed of two separate boards, a photodetector board **1401** and a light emitter board **1403**, connected via connection elements **1402**. The photodetector board **1401** performs the functions of both photodetection and electronic operations while the light emitter board **1403** performs the light emission function.

The connection elements **1402** are directed perpendicular to a plane of the photodetector board **1401** and the light emitter board **1403**. Thus, the electrical signals from the electronic circuitry in the photodetector board **1401** are passed directly to the light emitters in the light emitter board **1403**.

In one embodiment, the light emitters in the light emitter board **1403** share a common ground and e.g. only the anode of each light emitter is driven by the signal passed through the connection elements **1402**.

**FIG. 10b** depicts one example of how the photodetector board **1401** and light emitter board **1403** may be arranged. The board **1401** comprises a substrate with a front **1411** and a back **1412.** The board **1401** comprises electronic circuitry, but it can be seen that the electrical signals are passed though connection elements in a direction perpendicular to a plane of the board **1401**.

Front components **1411A** perform photodetection, may perform electronic processing operations as well, and output to back components **1412A** of the board. Back components **1412A** are wired to the front components **1431A** of light emitter board **1403**. The back components **1432A** perform light emission. Additional electronic components on the front or back of either board may perform additional electronic processing. The combined individual units of **1401A** and **1403A** perform the complete operation of **1400A**.

The boards **1401** and **1403** may combine each half of the units directly on the same two-dimensional array of the light emitters as shown in the embodiment of **1401B** and **1403B** in **FIG. 10c**. As depicted, one method of merging the two halves of **1401B** and **1403B** is using flip chip with a ball grid array **1420B**. In this manner, a large two-dimensional array of connections within a subarray **1400B**. An array **1400B** of subarrays can be assembled to form a nonlinear opto-electronic layer **140**.

As can be seen in **FIG. 10c** at the bottom, the balls of the ball grid array **1420B** establish an electrical connection in a direction that is perpendicular to a plane of the boards **1401B** and **1403B**. They represent electrical connection elements in a direction perpendicular to the board plane.

The boards **1401** and **1403** may combine each half of the units via an intermediate connector as shown in the embodiment of **1401C** and **1403C** in **FIG. 10d**. Here, an application specific integrated circuit (ASIC) is depicted in **1412C** to perform the electronic processing of 16 units, each with 2 photodetector inputs and one light emitter output. **1412C** and **1431C** each has a connector adapter that are connected with a cable **1420C**, which has one connection wire for each cable. As long as the ASIC and connector are enclosed within the combined subarray **1400C**, units of **1400C** may be laid out to form a larger nonlinear opto-electronic layer **140**. As can be seen in **FIG. 10d** at the bottom, the cables **1420C** are oriented essentially in a direction that is perpendicular to a plane of the boards **1401C**, **1403C**. In an assembled configuration, preferably the cables **1420C** are configured as short as possible and are preferably fully perpendicular to a plane of boards **1401C**, **1403C**.

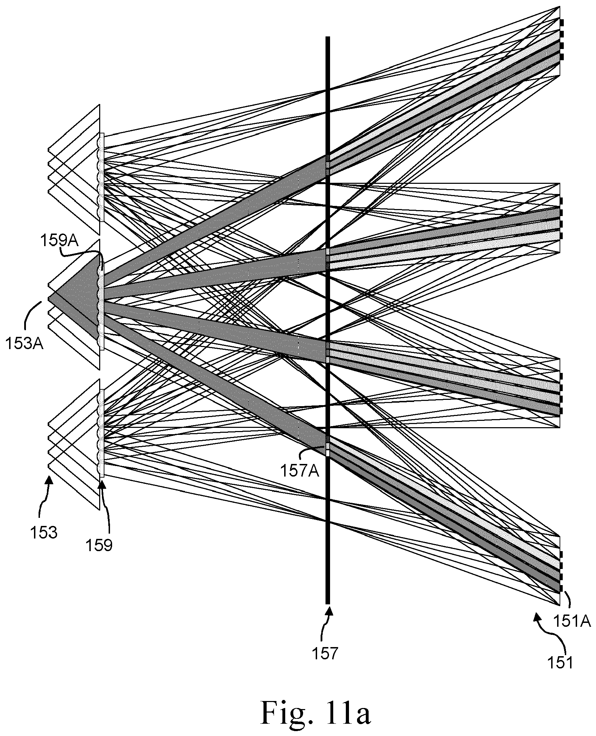

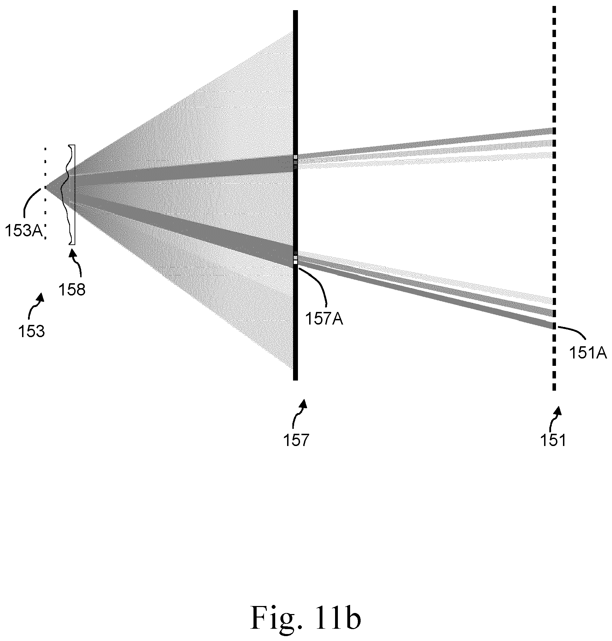

**FIGs. 11a** and **11b** schematically illustrate two possible embodiments of the linear optical layer that have desirable qualities when used with opto-electronic layers with large numbers of units. It depicts how a convolutional neural network layer and a graph convolutional neural network layer may be used with large numbers of units.

An embodiment of a linear optical layer **150** that implements a convolutional layer from three kernels to four kernels of size three is depicted schematically in **FIG. 11a**. A side view is used to demonstrate the mapping of information from light emitters **153** to photodetectors **151** in one dimension but is generally used for two dimensions as depicted in **FIG. 5****.** Microlenses **159** are used to help map light from the individual emitters **153A** to individual convolutional kernels **157A** implemented in a larger amplitude mask **157**. Each microlens **159A** interacts with multiple light emitters from a single group of emitters. The light from an individual emitter **153A** is shaded to illustrate how the optical signal is mapped from one light emitter to each associated photodetector **151A**.

An embodiment of a linear optical layer **150** that implements a weight matrix for a graph convolutional neural network is depicted schematically in **FIG. 11b**. A side view is used to demonstrate the mapping of information from light emitters **153** to photodetectors **151** in one dimension but is generally used for two dimensions as depicted in **FIG. 5****.** In the figure, the distribution of light from a single emitter **153A** through a custom designed lens **153B** and an amplitude mask **157** onto individual photodetectors **151A** is highlighted for visual clarity. A custom designed lens **153B** acts as the "graph" connection of the graph convolutional neural network layer. The amplitude mask **157** acts as the convolutional kernels associated with the optical layer. Like in **FIG. 11a**, individual convolutional kernels **157A** are represented within the larger amplitude mask **157**. The plots at the planes of the amplitude mask **156A** and photodetectors **151** are used to illustrate one example of the light distribution caused by the interaction of one light emitter **153A** with the heightmap **158A**.

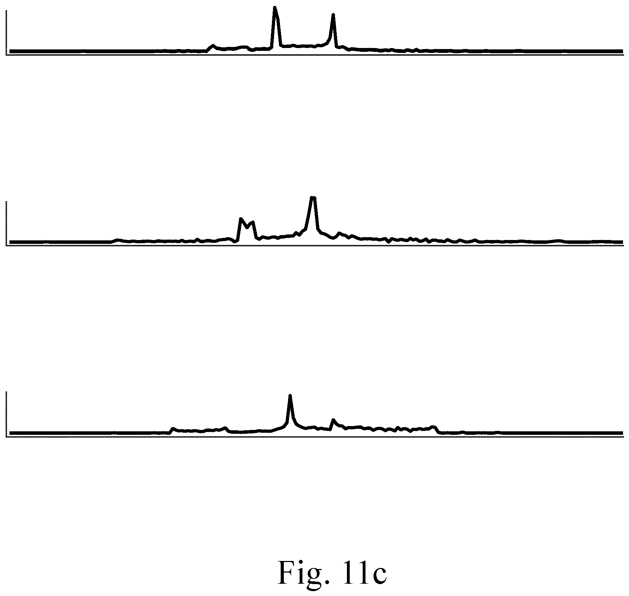

The light intensity from each of three light emitters from **FIG. 11b** is plotted in **FIG. 11c**. The top plot corresponds to the shaded light distribution of the highlighted light emitter that is displayed in **FIG. 11b**. A single custom designed lens **153B** creates different light distributions for each light emitter.

The lens **153B** is designed using a differentiable ray tracer.

Preferably, said input opto-electronic layer connects individual electronic inputs to individual light emitting units.

Optionally, an input opto-electronic layer multiplexes multiple electronic inputs from single input cables to multiple light emitting units.

Preferably, said opto-electronic layers include arrays of photodetectors that each provide an electrical signal which may be processed by electrical units that implement a mathematical function which may include a nonlinearity. Each output of the electrical units is routed to light-emitting units.

Optionally, said opto-electronic layers also combine and may also store electronic signals within the array during the processing steps in the electronic units.

Preferably, said opto-electronic layers include arrays of photodetectors that each provide an electrical signal which may be processed by electrical units that implement a mathematical function before being routed to electrical outputs.

In a further embodiment, said opto-electronic layers include arrays of photodetectors that each provide an electrical signal which may be processed by electrical units that implement a mathematical function and/or multiplexed before being routed to electrical outputs

In a further embodiment, said optical elements include an amplitude mask with individual subregions that map from a light emitter on one opto-electronic layer onto photodetectors of another opto-electronic layer.

In a further embodiment, said optical elements include an amplitude mask with weights that map from multiple light emitters from one opto-electronic layer onto photodetectors of another opto-electronic layer.

In a further embodiment, the optical elements include an amplitude mask with weights implemented by dithering of analog weights of an opaque material on a transparent surface.

In a further embodiment, said optical elements include height maps with weights that map from multiple light emitters from one opto-electronic layer onto photodetectors of another opto-electronic layer.

In a further embodiment, said height maps are calculated using a differentiable pathtracer.

In a further embodiment, said optical elements include a lenslet array, prism, or color-based filter to redirect light from light emitters on one opto-electronic layer to other optical elements or photodetectors of another opto-electronic layer.

In a further embodiment, an electronic clock signal provided by an external controller is used to synchronize the input and output of the system.

In a further embodiment, the clock signal is used to synchronize and facilitate the computation of multiple sets of input signals within the neural network simultaneously.

In a further embodiment, a normalization term is used to modulate the amplitude of all light emitters within an opto-electronic layer.

In a further embodiment, the photodetector and/or circuit elements are implemented in an application specific integrated circuit using and whose output is routed to a light-emitting unit.

In a further embodiment, the photodetector and/or circuit elements are implemented by a complementary metal oxide semiconductor process.

In a further embodiment, the individual response amplitudes of photodetectors on opto-electronic layers are normalized by weights from a prior or subsequent opto-electronic layer. A further embodiment relates to a method for artificial neural network computation performed by implementing a series of configurable linear and nonlinear mathematical operations comprising of:
a transformation of an array of electronic signals into incoherent optical signals using light emitter;
optical interconnects using a series of optical elements and free-space to rearrange optical signals spatially;
transformation of optical signals into electronic signals using photodetectors. The electronic signals may be locally combined before a nonlinear mathematical operation is applied electronically and the signals are transformed into incoherent optical signals using light emitters;
additional repetition of the previous two steps as required for the designed computation, ending with an optical interconnect;
a transformation of the optical signals into electronic signals using photodetectors;

In a further embodiment, the locally independent opto-electronic units on a two-dimensional surface are used to transform optical signals into electronic signals, applying a mathematical function, and transformed back into optical signals.

In a further embodiment, positive and negative numbers are implemented opto-electronically using incoherent light amplitude and photodetectors by using paired optical signals that are subtracted electronically.

In a further embodiment, complex numbers are implemented opto-electronically using incoherent light amplitude and photodetectors by using four optical signals that are each assigned a quadrant of the complex plane and processed electronically.

In a further embodiment, the amplitude masks and free space propagation of incoherent light are used to implement a fully connected weight matrix and matrix multiplication on a two-dimensional array.

In a further embodiment, the amplitude masks and free space propagation of incoherent light are used to implement convolutional kernels and two-dimensional convolution on a two-dimensional array.

In a further embodiment, the height maps and free space propagation of incoherent light are used to implement a sparse connection matrix and matrix multiplication on a two-dimensional array.

In a further embodiment, the design of height maps and/or amplitude masks is performed using a differentiable ray tracer for the purpose of implementing a mapping function from a set of incoherent light emitters to a set of photodetectors.

In a further embodiment, the combination of the above opto-electronic neural network with current neural network architectures including transformers, diffusion models, normalizing flows, geometric deep learning, graph neural networks are implemented.

In a further embodiment, the described neural network architectures is implemented partially with the opto-electronic neural network as an computation accelerator and is also partially implemented in a computer.

The above embodiments can be combined with one another.

Some of the illustrative aspects of the present invention may be advantageous in solving the problems herein described and other problems not discussed which are discoverable by a skilled artisan. While the above description contains much specificity, these should not be construed as limitations on the scope of any embodiment, but as exemplifications of the presented embodiments thereof. Many other ramifications and variations are possible within the teachings of the various embodiments. While the invention has been described with reference to exemplary embodiments, it will be understood by those skilled in the art that various changes may be made, and equivalents may be substituted for elements thereof without departing from the scope of the invention.

In addition, many modifications may be made to adapt a particular situation or material to the teachings of the invention without departing from the essential scope thereof. Therefore, it is intended that the invention is not limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. An opto-electronic computing device, comprising one or more computation modules that each comprise:
- an input layer comprising an array of photosensors for generating electrical signals based on input optical signals,
- an output layer comprising an array of light emitters for generating output optical signals,
- electronic circuitry for processing the generating electrical signals to generate driving signals for the array of light emitters, and
- an optical layer comprising an array of optical elements for modifying the optical signals,
**characterized in that** the device comprises one or more connection elements that pass the electrical signals from the input layer to the output layer and that are oriented perpendicular to a plane of the input layer.

2. The device of claim 1, wherein the input layer, the output layer and the electronic circuitry of at least one of the one or more computation modules are implemented on an opto-electronic processing board.

3. The device of claim 1, wherein the device further comprises:
- a read-in board comprising a read-in array of light emitters for receiving read-in electrical signals and outputting optical signals, and/or
- a read-out board comprising a read-out array of photoemitters for receiving optical signals and outputting read-out electrical signals.

4. The device of one of the previous claims, comprising a plurality of computation units which are oriented in parallel.

5. The device of one of the previous claims, wherein the electronic circuitry is mounted on the input layer.

6. The device of one of the previous claims, wherein the electronic circuitry is configured to combine a first and a second electrical signal from two adjacent photosensors to implement a subtraction and to generate a driving signal based on a result of the subtraction.

7. The device of one of the previous claims, wherein the electronic circuitry is configured to combine a plurality of electrical signals from adjacent photosensors to implement a maximum value function and/or an average value function.

8. The device of one of the previous claims, wherein the electronic circuitry is configured to combine electrical signals from four adjacent photosensors to implement a complex number encoding function, and/or
wherein the electronic circuitry is configured to temporarily store a state corresponding to an input optical signal and/or corresponding to a driving signal, and/or
wherein the electronic circuity is configured to perform non-linear processing of the electrical signals and/or the optical layer is configured to perform linear processing of the optical signals.

9. The device of one of the previous claims, wherein the device comprises a plurality of computation modules, in particular a plurality of computation modules with same dimensions and/or a same number of photosensors and/or light emitters, wherein the plurality of computation modules are arranged in a sequence, where the modulated output optical signals of one computation modules are passed to a next computation module of the plurality of computation modules.

10. The device of claim 9, wherein the optical elements include an amplitude mask with weights that map from multiple light emitters of the array of light emitters to photosensors of an array of photosensors of the next computation module, wherein preferably the weights are implemented by dithering of analog weights of an opaque material on a transparent surface.

11. The device of claim 10, wherein optical signals from a group of emitters interact with a same region of the amplitude mask, wherein preferably a spatially shifted interaction between groups of emitters and amplitude mask regions implements a convolution operation.

12. The device of one of claims 9 to 11, wherein the optical elements include one or more lenses that are configured to direct light from multiple light emitters to photosensors of an array of photosensors of the next computation module, wherein preferably the one or more lenses are designed based on a height map that has been determined using a differentiable raytracer.

13. The device of one of claims 9 to 12, wherein the device further comprises optical connections that bypass one or more computation modules in the sequence of computation modules, and/or wherein the optical layer is configured such that the optical signal sequentially passes through a first free space, the array of optical elements and a second free space, before reaching photosensors of the next computation module and/or an output module.

14. The device of one of the previous claims, wherein the optical layer comprises an array of lenslets and the device is configured such that the optical signals from groups of light emitters pass through a same lenslet of the array of lenslets.

15. A method for building an electro-optical computing device, in particular an opto-electronic computing device according to one of the previous claims, **characterized in that** the method comprises a step of using raytracing to create the optical elements of the optical layer of the one or more computation modules of the electro-optical computing device.
